# EUROPÄISCHE PATENTANMELDUNG

(11) **EP 2 047 896 A2**
(43) Veröffentlichungstag der Anmeldung: **15.04.2009**
(21) Anmeldenummer: 08016934.5
(22) Anmeldetag: 26.09.2008
(51) Int. Cl.: B01D 46/02, B01D 46/06, B01D 46/00

(54) **Schlauchfilter, Stützkorb für denselben und Schlauchfilteranlage**

(30) Priorität: 09.10.2007 DE 102007048554
(71) Anmelder: Schuko H. Schulte-Südhoff GmbH, 49196 Bad Laer (DE)
(72) Erfinder: Schulte-Südhoff, Heinz, 49196 Bad Laer (DE); Schulte-Südhoff, Heiko, 49214 Bad Rothenfelde (DE)
(74) Vertreter: Möller, Friedrich

(57) **Zusammenfassung**

Schlauchfilteranlagen zum Trennen von Feststoffen, insbesondere Spänen und/oder Staub aus einem Luft-Feststoffgemisch, weisen Schlauchfilter (22) auf. Bekannte Schlauchfilter (22) verfügen nur über einen Filterschlauch (27), wodurch die Filterfläche relativ klein ist. Um die Leistung solcher Schlauchfilteranlagen zu erhöhen, sind zusätzliche Schlauchfilter (22) erforderlich, was zu relativ großen Abmessungen solcher Schlauchfilteranlagen führt.

Die Erfindung sieht es vor, die Schlauchfilter (22) mehrwandig auszubilden, indem sie bevorzugt einen Außenfilterschlauch (27) und einen Innenfilterschlauch (28) aufweisen. Der konzentrisch im Außenfilterschlauch (27) angeordnete kleinere Innenfilterschlauch (28) führt quasi zu einer Verdoppelung der Filterfläche des erfindungsgemäßen Schlauchfilters (22), wodurch die Leistung der Schlauchfilteranlage ohne eine Erhöhung des Bauvolumens vergrößert wird.

## Beschreibung

Die Erfindung betrifft einen Schlauchfilter für Schlauchfilteranlagen zum Trennen von Feststoffen, insbesondere von Spänen und/oder Staub aus einem Luft-/Feststoffgemisch, gemäß dem Oberbegriff des Anspruchs 1. Des Weiteren betrifft die Erfindung einen Stützkorb für einen Schlauchfilter nach dem Oberbegriff des Anspruchs 11 und eine Schlauchfilteranlage gemäß dem Oberbegriff des Anspruchs 14.

Schlauchfilteranlagen der hier angesprochenen Art finden überwiegend bei der Holz- oder Papierverarbeitung Verwendung. Es handelt sich dabei um stationäre oder mobile Anlagen zum Filtern und/oder Abscheiden von Stäuben, Papierschnitzel, Sägespänen oder Holzspänen.

Bekannte Schlauchfilteranlagen verfügen über einen Filterschlauch aufweisende Schlauchfilter. Im Inneren der Schlauchfilter wird ein Unterdruck erzeugt, wodurch sich auszufilternde Feststoffe außen an der Wandung des jeweiligen Filterschlauchs absetzen und die gereinigte Luft durch das Innere des Filterschlauchs abgesaugt werden kann. Durch Stützkörper wird der jeweilige Filterschlauch gegen den Unterdruck im Inneren abgestützt.

Die Filterleistung von Schlauchfilteranlagen ist entscheidend abhängig von der gesamten Mantelfläche aller Filterschläuche der Schlauchfilteranlage. Um die Filterleistung einer Schlauchfilteranlage zu erhöhen, muss die Anzahl der Filterschläuche vergrößert werden, wodurch die Außenabmessungen bekannter Schlauchfilteranlagen mit zunehmender Filterleistung beträchtlich ansteigen.

Der Erfindung liegt daher die Aufgabe zugrunde, eine Schlauchfilteranlage, einen Schlauchfilter und einen Stützkörper für einen Schlauchfilter zu schaffen, womit sich höhere Filterleistungen erzielen lassen.

Ein Schlauchfilter zur Lösung der eingangs genannten Aufgabe weist die Merkmale des Anspruchs 1 auf. Dadurch, dass der Schlauchfilter zusätzlich zu einem Außenfilterschlauch mindestens einen Innenfilterschlauch aufweist, verfügt er über eine größere wirksame Filterfläche. Der Platzbedarf des Schlauchfilters wird dadurch nicht erhöht, weil die zusätzliche Filterfläche im Inneren des Schlauchfilters, nämlich im Außenfilterschlauch, geschaffen wird.

Verfügt der Schlauchfilter über nur einen Innenfilterschlauch, ist er nach Art eines Doppelfilterschlauchs ausgebildet. Es ist aber auch denkbar, mehrere Innenschläuche vorzusehen. Wenn beispielsweise drei Innenfilterschläuche im Außenfilterschlauch untergebracht sind, sind praktisch zwei Doppelschlauchfilter ineinandergeschachtelt. Dabei ist die wirksame Filterfläche mehr als verdoppelt, und zwar nahezu vervierfacht.

Wenn im Folgenden nur vom Außenfilterschlauch und vom Innenfilterschlauch gesprochen wird, geschieht das aus Vereinfachungsgründen, ohne dass darauf die Erfindung beschränkt werden soll.

Durch die Anordnung des Innenfilterschlauchs im Außenfilterschlauch wird zwischen den Filterschläuchen ein Ringraum gebildet. Aus diesem Ringraum wird von der Schlauchfilteranlage Luft abgesaugt, und zwar durch ein als Saugende bezeichnetes Ende des Schlauchfilters. Dadurch wird das Luft-Feststoffgemisch an der Außenfläche des Außenfilterschlauchs und der Innenfläche des Innenfilterschlauchs angesaugt. Dabei dienen beide Filterschläuche zur Bildung von Filterflächen.

Der Ringraum zwischen den Filterschläuchen ist an einem Ende geschlossen, und zwar vorzugsweise an demjenigen Ende, dass dem Saugende des Schlauchfilters gegenüberliegt. Dadurch kann in den Ringraum nur von Staub oder sonstigen Feststoffen befreite Luft gelangen. Vorzugsweise ist der Ringraum am dem Saugende gegenüberliegenden Ende verschließbar durch eine ringförmige Kappe mit einer mittigen Öffnung, wodurch das zu filternde Luft-Feststoffgemisch auch ins Innere des Innenfilterschlauchs gelangen kann. Bei einer bevorzugten Ausgestaltung der Erfindung dient diese ringförmige Kappe oder ein sonstiger Verschlussgegenstand auch dazu, die Enden der Filterschläuche zu halten. Dazu ist das dem Saugende weggerichtete Ende sowohl des Außenfilterschlauchs als auch des Innenfilterschlauchs mit der ringförmigen Kappe verbunden, und zwar durch Klemmen, Kleben, Nähen und/oder Knoten. Durch diese Verbindung können die Filterschläuche als Ganzes gehandhabt werden, bilden insbesondere einen zusammenhängenden Schlauchfilter.

Es ist des Weiteren vorgesehen, eine zum Saugende weisende Stirnseite des Innenfilterschlauchs zu verschließen. Dadurch muss die sich im Innenfilterschlauch sammelnde feststoffhaltige Luft durch die zur Filterung dienende Filterwandung des Innenfilterschlauchs in den Ringraum strömen.

Der mindestens eine Innenfilterschlauch kann sowohl zylindrisch als auch konisch ausgebildet sein. In beiden Fällen liegen Längsmittelachsen des Außenfilterschlauchs und des Innenfilterschlauchs auf einer gemeinsamen Linie, so dass der Außenfilterschlauch den jeweiligen Innenfilterschlauch konzentrisch umgibt. In der Länge sind die Filterschläuche vorzugsweise gleich ausgebildet. Gegebenenfalls kann aus strömungstechnischen und montagetechnischen Gründen der Innenfilterschlauch etwas kürzer sein als der Außenfilterschlauch, insbesondere wenn der Innenfilterschlauch zylindrisch ausgebildet ist.

Gemäß einer bevorzugten Ausgestaltung der Erfindung ist vorgesehen, dass der Stützkorb zur Anordnung zwischen dem Außenfilterschlauch und dem Innenfilterschlauch ausgebildet ist. Ein solcher Stützkorb befindet sich dann im Ringraum zwischen den unterschiedlich großen Filterschläuchen. Aufgrund dieser Anordnung und Ausbildung kann mit einem einzigen Stützkorb sowohl der Außenfilterschlauch von innen her und der Innenfilterschlauch von außen her abgestützt werden, so dass bei Beaufschlagung des Ringraums mit Unterdruck zum Absaugen der gefilterten Luft die konzentrisch zueinander verlaufenden Filterschläuche voneinander beabstandet bleiben und nicht zusammengesaugt werden können, wodurch wirksam Filterfläche des Schlauchfilters verloren ginge.

In der Länge ist der Stützkorb vorzugsweise so ausgebildet, dass er mindestens den Innenfilterschlauch über seine gesamte Länge abstützt, vorzugsweise auch den Außenfilterschlauch. Dann kann der Stützkorb dazu dienen, den gesamten Schlauchfilter an einer Deckenwandung der Schlauchfilteranlage aufzuhängen.

Der im Ringraum zwischen den Filterschläuchen angeordnete Stützkorb weist zum Abstützten des Innenfilterschlauchs Längsstege auf, die so angeordnet sind, dass ihre nach innen weisenden Längskanten den Innenfilterschlauch außenseitig abstützen. Bevorzugt sind die Längsstege so angeordnet oder ausgebildet, dass ihre den Innenfilterschlauch stützenden Längskanten auf einer gedachten Zylindermantelfläche liegen, die vorzugsweise mit dem Durchmesser des Innenfilterschlauchs korrespondiert. Dadurch wird der Innenfilterschlauch in seiner zylindrischen Gestalt gleichmäßig von den Längsstegen des Stützkorbs abgestützt, wobei die Längskanten der Längsstege vorzugsweise gleichmäßig oder zumindest annähernd gleichmäßig auf den Außenumfang des Innenfilterschlauchs verteilt sind.

Ein Stützkorb zur Lösung der eingangs genannten Aufgabe weist die Merkmale des Anspruchs 11 auf. Dieser Stützkorb verfügt zusätzlich zu einer gitterartigen Stützstruktur über Längsstege mit ins Innere der Stützstruktur weisenden Längskanten. Die Stützstruktur dient zur Abstützung eines Außenfilterschlauchs eines Schlauchfilters, während die nach innen weisenden Längskanten der Längsstege zur außenseitigen Abstützung eines Innenfilterschlauchs dienen. Mit dem erfindungsgemäßen Stützkorb sind gleichzeitig zwei konzentrische Filterschläuche eines Doppelfilterschlauchs so abstützbar, dass zwischen den Filterflächen des Außenfilterschlauchs und des Innenfilterschlauchs ein umlaufender Ringraum zum Absaugen der gefilterten Luft verbleibt, so dass sich der Innenfilterschlauch und der Außenfilterschlauch nicht berühren.

Bevorzugt weist mindestens ein Großteil der Längsstege die gleiche Ausrichtung auf, indem die Längsstege parallel zueinander verlaufen, und zwar vorzugsweise parallel zu einer Längsmittelebene des Stützkorbs, wobei zwei Längsstege auch auf dieser Längsmittelebene liegen können. Ein solcher Stützkorb lässt sich mit einer einfachen Spritzgussform aus Kunststoff im Spritzgussverfahren herstellen.

Die parallel zueinander verlaufenden Längsstege sind insbesondere in ihrer Breite so bemessen, dass ihre nach innen weisenden Längskanten alle auf einer gemeinsamen gedachten Zylinderfläche liegen, wobei diese Zylinderfläche vorzugsweise mit der zylindrischen Filterfläche des Innenfilterschlauchs korrespondiert, eventuell jedoch etwas größer oder kleiner sein kann.

Der vorzugsweise aus Kunststoff bestehende Stützkorb kann ein- oder mehrteilig ausgebildet sein. Ein mehrteiliger Stützkorb besteht beispielsweise aus zwei Halbschalen, die getrennt hergestellt und vor der Montage des Schlauchfilters lösbar oder unlösbar verbunden sind, beispielsweise durch Rasten, Kleben oder Schweißen. Ein einteiliger Stützkorb kann aus zwei an benachbarten Längsrändern zusammenhängenden Halbschalen gebildet sein. Die Halbschalen sind durch Gelenke oder als Scharniere, insbesondere ein Filmscharnier, fest miteinander verbunden. Die beiden Halbschalen werden im aufgeklappten nebeneinanderliegenden Zustand hergestellt. Dabei verlaufen die Längsstege beider Halbschalen parallel zueinander, wodurch der aufgeklappte Stützkorb leicht im Spritzgussverfahren herstellbar ist. Vor der Montage des Schlauchfilters werden die Halbschalen um die Scharnierachse zusammengeklappt und an den außenliegenden Längsrändern lösbar oder auch unlösbar verbunden, beispielsweise durch Rasten. Durch das nachträgliche Zusammenklappen der Halbschalen nimmt der noch auseinandergeklappte Stützkorb zum Transport verhältnismäßig wenig Platz ein, weil sich mehrere aufgeklappte Stützkorb ineinanderstapeln lassen. Denkbar ist es aber auch, den Stützkorb als geschlossenen, einstückigen Käfig zu bilden.

Eine Schlauchfilteranlage zur Lösung der eingangs genannten Aufgabe weist die Merkmale des Anspruchs 14 auf. Eine solche Schlauchfilteranlage zeichnet sich durch eine Vielzahl der zuvor beschriebenen Schlauchfilter mit Stützkörben aus. Die Schlauchfilter sind neben- und hintereinanderliegend in der Schlauchfilteranlage, insbesondere einer Deckenwandung derselben, aufgehängt, wobei die Längsmittelachsen der Schlauchfilter in Draufsicht der Schlauchfilteranlage gesehen auf ein Raster verteilt sind, so dass im Gehäuse der Schlauchfilteranlage die Filterschläuche nebeneinander und hintereinander aufgehängt sind.

Die Filterschläuche sind mit ihren vorzugsweise oberen Saugenden an der Deckenwandung der Schlauchfilteranlage aufgehängt. Bei Filterschläuchen aus einem Außenfilterschlauch und einem Innenfilterschlauch, bei denen die saugseitigen Enden der Innenfilterschläuche verschlossen sind, ist es denkbar, diese verschlossenen Enden der Innenfilterschläuche an einer beweglichen Halterung, beispielsweise Stangen, aufzuhängen. Dadurch können die Filterschläuche von Zeit zu Zeit gerüttelt oder in Schwingungen versetzt werden, um sie von außen an den Filterschläuchen, und zwar sowohl den Innenfilterschläuchen als auch den Außenfilterschläuchen, anhaftenden Staub oder dergleichen zu befreien.

Wenn die Schlauchfilter als Doppelschlauchfilter mit jeweils einem Außenfilterschlauch und einem Innenfilterschlauch ausgebildet sind, steht ungefähr die doppelte Filterleistung gegenüber einer herkömmlichen Schlauchfilteranlage mit Schlauchfiltern aus nur Außenfilterschläuchen zur Verfügung. Eine noch größere Leistungssteigerung ist erzielbar, wenn die Schlauchfilter aus mehr als zwei konzentrisch ineinander angeordneten Filterschläuchen gebildet sind, beispielsweise aus drei Filterschläuchen oder vier Filterschläuchen.

Bevorzugte Ausführungsbeispiele der Erfindung werden nachfolgend anhand der Zeichnung näher erläutert. In dieser zeigen:
- Fig. 1: eine schematische Seitenansicht einer Schlauchfilteranlagen mit teilweise aufgeschnittenem Gehäuse,
- Fig. 2: eine Seitenansicht eines Schlauchfilters mit nur teilweise dargestellten Filterschläuchen,
- Fig. 3: einen Längsschnitt III-III durch den Schlauchfilter der Fig. 2 ohne Filterschläuche,
- Fig. 4: einen Schnitt IV-IV durch den Schlauchfilter der Fig. 2,
- Fig. 5: einen Schnitt V-V durch den Schlauchfilter der Fig. 3,
- Fig. 6: ein alternatives Ausführungsbeispiel eines Stützkorbs für den Schlauchfilter der Fig. 2,
- Fig. 7: den Stützkorb der Fig. 4 und 5 im aufgeklappten Zustand,
- Fig. 8: eine Schlauchfilteranlage gemäß einem zweiten Ausführungsbeispiel der Erfindung in einer Ansicht analog zur Fig. 1,
- Fig. 9: eine perspektivische Ansicht eines Schlauchfilters der Schlauchfilteranlage der Fig. 8 mit nur teilweise dargestelltem Außenfilterschlauch,
- Fig. 10: den Schlauchfilter der Fig. 9 im mittigen Längsschnitt X-X,

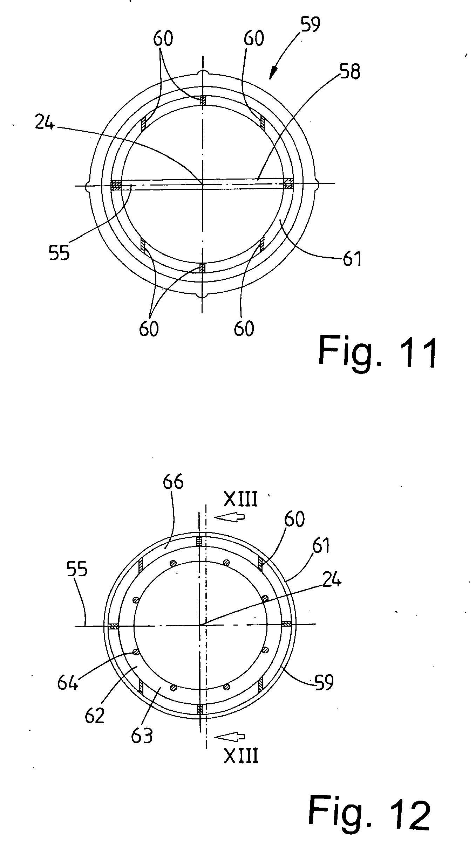

- Fig. 11: einen Schnitt XI-XI durch den Schlauchfilter der Fig. 9,
- Fig. 12: einen Schnitt XII-XII durch den Schlauchfilter der Fig. 9,
- Fig. 13: einen Längsschnitt XIII-XIII durch einen Stützkörper für den Innenfilterschlauch des Schlauchfilters der Fig. 12, und
- Fig. 14: eine Draufsicht auf den Stützkörper der Fig. 13.

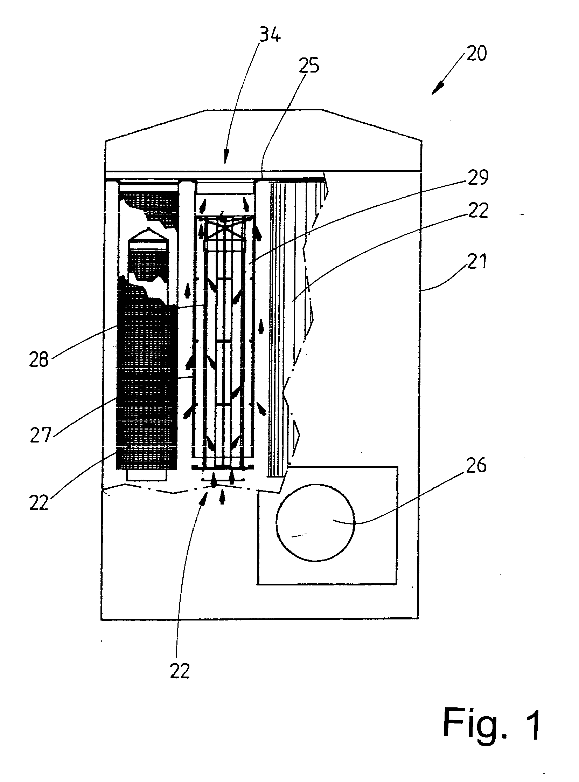

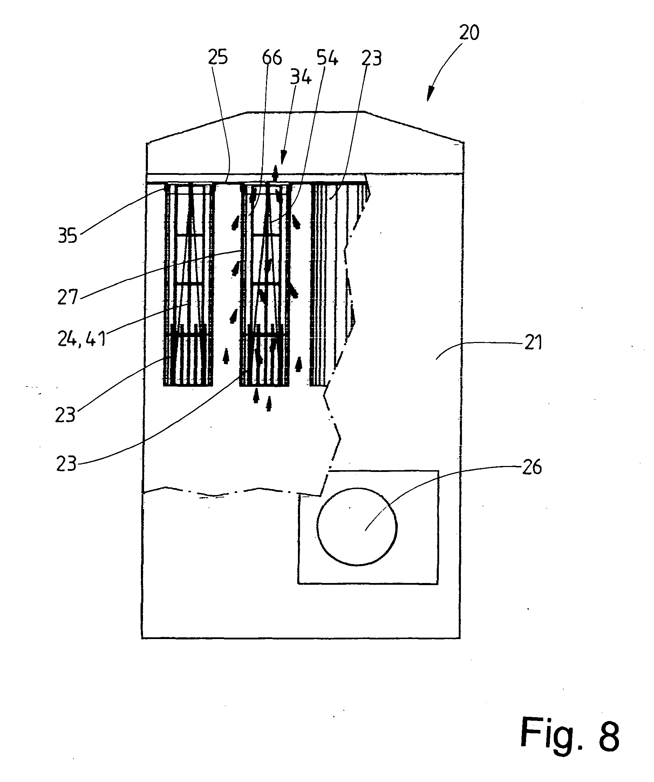

Die Fig. 1 und 8 zeigen schematisch eine Seitenansicht einer Schlauchfilteranlage 20 zum Trennen von Feststoffen, insbesondere Staub, Spänen und/oder Papierpartikel aus einem Luft-/Feststoffgemisch. Die Schlauchfilteranlage 20 kann stationär oder mobil ausgebildet sein. Sie findet bevorzugt Verwendung in holz- und papierverarbeitenden Betrieben, wie beispielsweise Tischlereien oder Druckereien. Die Schlauchfilteranlage 20 verfügt über ein kastenartiges, geschlossenes Gehäuse 21. Im Gehäuse 21 der Schlauchfilteranlage 20 sind rasterartig verteilt mehrere vorzugsweise gleiche Schlauchfilter 22 bzw. 23 hängend, also mit senkrecht verlaufender Längsmittelachse 24, angeordnet. Die Schlauchfilter 22 bzw. 23 sind an einer Deckenwand, insbesondere einer Zwischendecke 25, im Gehäuse 21 der Schlauchfilteranlage 20 aufgehängt. Die Schlauchfilteranlagen 20 der Fig. 1 und 8 unterscheiden sich hinsichtlich der Gestaltung der Schlauchfilter 22 bzw. 23. Üblicherweise sind in der Schlauchfilteranlage 20 gleiche Schlauchfilter 22 (Fig. 1) oder 23 (Fig. 8) angeordnet.

Die in den Fig. 1 gezeigte Schlauchfilteranlage 20 weist einen seitlichen Ansaugstutzen 26 auf. Durch den Ansaugstutzen 26 gelangt abgesaugter Staub, also mit Spänen, Papierpartikeln oder auch anderen Feststoffen versetzte Luft, in das Gehäuse 21 der Schlauchfilteranlage 20. Durch mindestens einen nicht dargestellten Ventilator wird über der Zwischendecke 25 Luft angesaugt und dadurch in den Schlauchfiltern 22, 23 ein Saugluftstrom erzeugt. Dadurch wird das Luft-Feststoffgemisch zu den Schlauchfiltern 22, 23 gesaugt und gefiltert, indem die Luft durch die Schlauchfilter 22, 23 gesaugt wird, wobei an den Filterflächen der Schlauchfilter 22, 23 die Feststoffe, beispielsweise Späne oder Papierpartikel, festgehalten werden. Die Feststoffpartikel fallen mit der Zeit von den Schlauchfiltern 22, 23 ab und sammeln sich in einem nicht dargestellten Sammelbehälter für die Feststoffpartikel unterhalb der Schlauchfilter 22, 23 im Gehäuse 21.

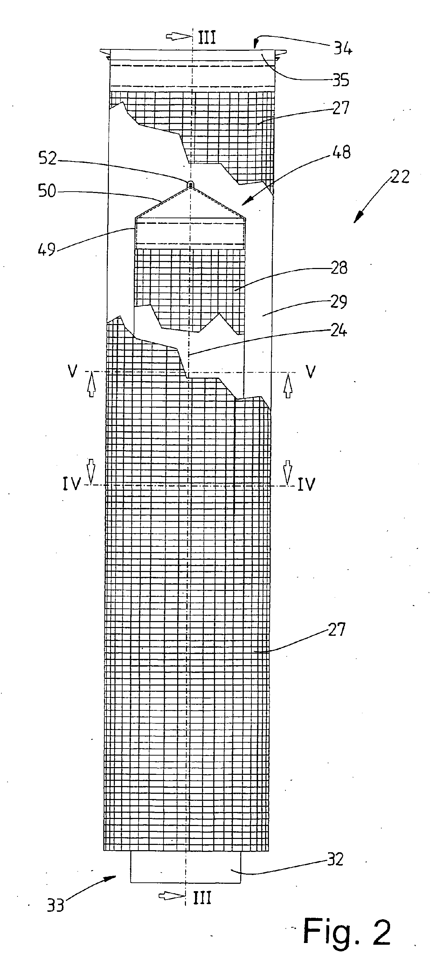

Die Fig. 2 bis 5 und 7 zeigen ein erstes Ausführungsbeispiel des erfindungsgemäßen Schlauchfilters 20, von dem mehrere in der Schlauchfilteranlage 20 der Fig. 1 hängend angeordnet sind.

Der gezeigte Schlauchfilter 22 ist als ein Doppelschlauchfilter ausgebildet, verfügt nämlich über einen zylindrischen Außenfilterschlauch 27 und einen im Durchmesser kleineren zylindrischen Innenfilterschlauch 28. Die Filterschläuche 27 und 28 sind vorzugsweise aus dem gleichen Material gebildet. Hierbei kann es sich um ein textiles Material in Gestalt eines Gewebes oder eines Vlieses, insbesondere eines Nadelvlieses, handeln. Es ist auch denkbar, die Filterschläuche 27 und 28 aus einem siebartigen Material, beispielsweise einem Drahtgeflecht oder einem feinen Kunststoffgitter, zu bilden.

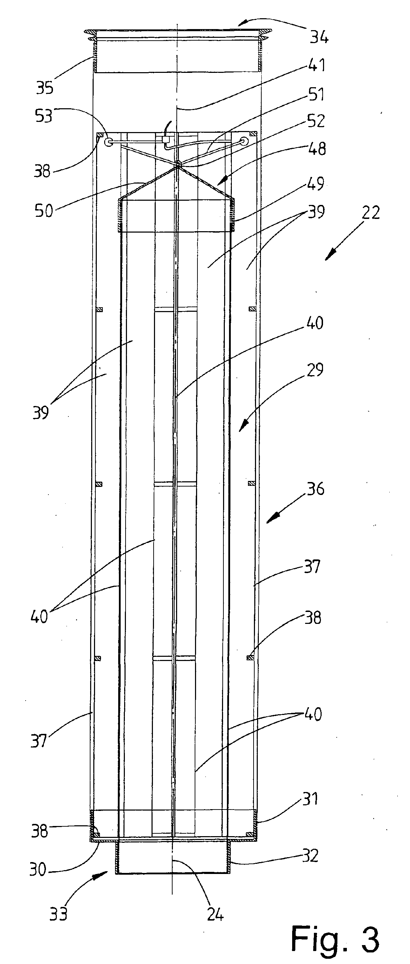

Der Innenfilterschlauch 28 ist konzentrisch im einen größeren Durchmesser aufweisenden Außenfilterschlauch 27 angeordnet, so dass die Längsmittelachsen der Filterschläuche 27, 28 sich decken, nämlich auf der Längsmittelachse 24 des Schlauchfilters 22 liegen. Infolge der konzentrischen Anordnung des Außenfilterschlauchs 27 um den kleineren Innenfilterschlauch 28 herum entsteht zwischen den Wandungen des Außenfilterschlauchs 27 und des Innenfilterschlauchs 28 ein umlaufender Ringraum 29, dessen Querschnitt über die gesamte Länge des Schlauchfilters 22 gleich ist, weil der Außenfilterschlauch 27 und der Innenfilterschlauch 28 über zylindrische Filterflächen verfügen. Im gezeigten Ausführungsbeispiel ist der Innenfilterschlauch 28 etwas kürzer als der Außenfilterschlauch 27 (Fig. 3). Ein unteres Ende des Ringraums 29 zwischen den Filterschläuchen 27, 28 ist geschlossen. Dazu dient im gezeigten Ausführungsbeispiel eine ringförmige Kappe 33 mit einer Kreisringfläche 30, die senkrecht zur Längsmittelachse 24 verläuft und einen nach oben weisenden Außenkragen 31 sowie einen nach unten weisenden zylindrischen Innenkragen 32 kleineren Durchmessers aufweist. Der Innenkragen 32 umgibt eine mittige kreisförmige Öffnung der Kappe 33. Diese Öffnung entspricht etwa dem Durchmesser des Innenfilterschlauchs 28. Die ringförmige Kappe 33 ist bevorzugt dünnwandig aus Kunststoff, insbesondere thermoplastischem Kunststoff, gebildet. Mit dem Außenkragen 31 der Kappe 33 ist ein schmaler unterer Endbereich des Außenfilterschlauchs 27 verbunden, während im Innenkragen 32 ein schmaler Endbereich des Innenfilterschlauchs 28 verbunden ist. Die Verbindung der Filterschläuche 27, 28 mit der Kappe 33 erfolgt vorzugsweise durch Nähen. Aber auch andere Verbindungstechniken können in Betracht kommen.

Ein oberes Ende des Außenfilterschlauchs 27, bei dem es sich um ein Ansaugende 34 handelt, durch das Luft aus dem Ringraum 29 des Schlauchfilters 22 abgesaugt wird, ist mit einem Haltekragen 35 verbunden, beispielsweise auch vernäht. Mit dem Haltekragen 35 ist der Schlauchfilter 22 in eine entsprechende zylindrische Öffnung der Zwischendecke 25 der Schlauchfilteranlage 20 einhängbar, und zwar bevorzugt luftdicht.

Der Außenfilterschlauch 27 und der Innenfilterschlauch 28 des Schlauchfilters 22 werden durch einen einzigen im Ringraum 29 angeordneten Stützkorb 36 auf Abstand gehalten.

Der vorzugsweise aus Kunststoff einstückig hergestellte Stützkorb 36 stützt so den Außenfilterschlauch 27 von innen und den Innenfilterschlauch 28 von außen ab, so dass infolge des Unterdrucks, der beim Absaugen gereinigter Luft aus dem Ringraum 29 zwischen dem Außenfilterschlauch 27 und dem Innenfilterschlauch 28 entsteht, die Filterwandungen der Filterschläuche 27 und 28 vom Stützkorb 36 ringsherum und auf ganzer Länge auf Abstand gehalten werden.

Der Stützkorb 36 verfügt über eine gitterartige Stützstruktur aus mehreren am Außenumfang verteilten Längsstäben 37 und diese zusammenhaltende in Längsrichtung des Stützkorbs 36 beabstandete Ringe 38. Die Längsstäbe 37 sind auf einem gedachten Zylindermantel verteilt und verlaufen mit gleichem Abstand parallel zur Längsmittelachse 24 des Schlauchfilters 22. Die beabstandeten Ringe 38 schneiden die Längsmittelachse 24 senkrecht. Zumindest an den Längsstäben 37 liegt der Außenfilterschlauch 27 von außen an, so dass die Längsstäbe 37 den Außenfilterschlauch 27 von innen abstützen. Gegebenenfalls können auch die Ringe 38 an der inneren Mantelfläche des Außenfilterschlauchs 27 anliegen, um diesen zusätzlich abzustützen.

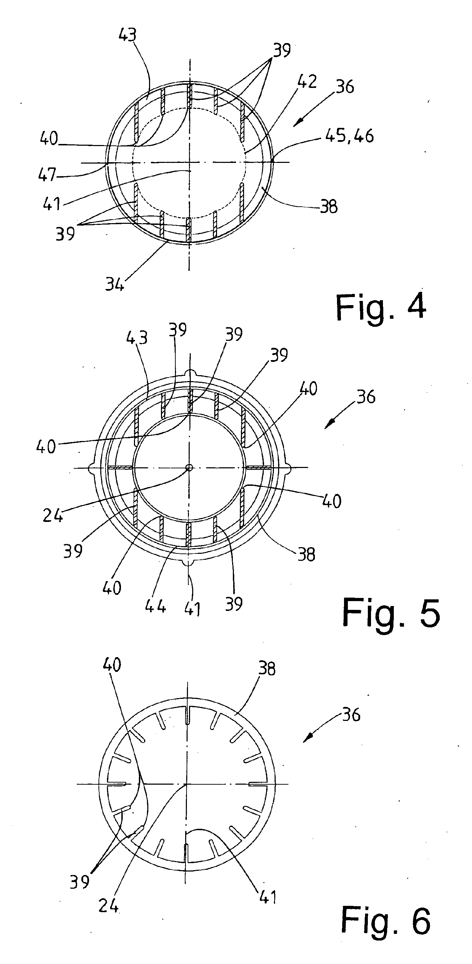

Der erfindungsgemäße Stützkorb 36 weist zusätzlich mehrere gleichmäßig auf seinen Umfang verteilte Längsstege 39 auf. Freie Längskanten 40 der Längsstege 39 weisen ins Innere des Schlauchfilters 22. Diese Längskanten 40 dienen zur außenseitigen Abstützung des Innenfilterschlauchs 28. Dazu sind die Längsstege 39 so ausgebildet, insbesondere in der Breite so bemessen, dass die Längskanten 40 aller Längsstege 39 auf einer gemeinsamen gedachten Zylinderfläche 42 liegen, die mit dem Außenumfang des Innenfilterschlauchs 28 korrespondiert, nämlich etwa dem Außendurchmesser des Innenfilterschlauchs 28 entspricht oder geringfügig größer bzw. kleiner ist. Verbunden sind die Längsstege 39 einstückig mit mindestens den Ringen 38 zur Bildung des insgesamt einteiligen Stützkorbs 36. Vorzugsweise sind die Längsstege 39 auch mit den Längsstäben 37 verbunden. Dabei können die Längsstege 39 gleichzeitig die Längsstäbe 37 bilden. Wie die Fig. 4 und 5 zeigen, verlaufen alle Längsstege 39 parallel zueinander. Außerdem verlaufen die Längsstege 39 parallel zu einer Längsmittelebene 41 des Stützkorbs 36, wobei zwei Längsstege 39 auch auf der Längsmittelebene 41 liegen können. In der Breite sind die Längsstege 39 unterschiedlich bemessen, und zwar so, dass alle Längskanten 40 auf einer gedachten Zylinderfläche 42 liegen. Dadurch können die Längskanten 40 den zylindrischen Innenfilterschlauch 28 von außen abstützen, so dass er jedenfalls in den Bereichen der Anlage an den Längskanten 40 seine zylindrische Gestalt beibehält, nämlich entsprechend abgestützt wird.

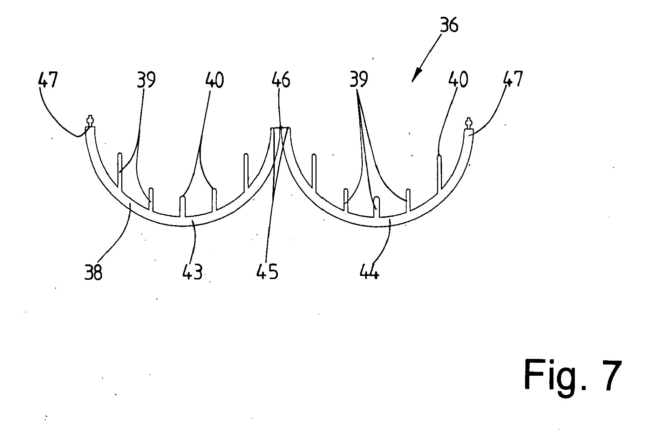

Der Stützkorb 36 besteht aus zwei gleichgroßen auf- und zusammenklappbaren Halbschalen 43, 44. Die Fig. 7 zeigt den aufgeklappten Stützkorb 36 mit nebeneinanderliegenden Halbschalen 43, 44. In diesem aufgeklappten Zustand wird der Stützkorb 36 aus Kunststoff im Spritzgussverfahren hergestellt. In diesem Zustand kann der Stützkorb 36 auch platzsparend transportiert werden. Die beiden Halbschalen 43, 44 werden einstückig, nämlich an benachbarten Längsrändern 45 durch ein Filmscharnier 46 zusammenhängend, hergestellt. Gegenüberliegende, äußere Längsränder 47 der Halbschalen 43, 44 weisen geeignete Verschlussmittel auf, womit zum Beispiel rastend bei geschlossenem Stützkorb 36 die zusammengeklappten Halbschalen 43, 44 an den äußeren Längsrändern 47 verbindbar sind. Hierbei kann es sich um eine lösbare oder unlösbare Verbindung handeln. Die Fig. 7 lässt erkennen, dass bei der Herstellung des Stützkorbs 36 mit aufgeklappten Halbschalen 43, 44 alle Längsstege 39 parallel zueinander verlaufen, wodurch der Stützkorb 36 sich einfach im Spritzgussverfahren herstellen lässt.

Die Fig. 6 zeigt ein alternatives Ausführungsbeispiel des Stützkorbs 36 mit gleichen, vor allem gleich breiten Längsstegen 39, die radial gerichtet sind, also mit den Längskanten 40 zur Längsmittelachse 24 des Stützkorbs 36 weisen. Der in der Figur gezeigte Stützkorb 36 mit radial gerichteten Längsstegen 39 kann wie der in den Fig. 4, 5 und 7 gezeigte Stützkorb 36 aus zwei auseinander- und zusammenklappbaren Halbschalen 43, 44 gebildet sein, aber auch geschlossen, indem er sich nicht aufklappen lässt.

Im Ausführungsbeispiel der Fig. 3 ist der Stützkorb 36 etwas kürzer als der Außenfilterschlauch 27 ausgebildet, indem er kurz vor dem Haltekragen 35 endet. Es ist auch denkbar, den Stützkorb 36 länger auszubilden, sodass ein Endbereich des Stützkorbs 36 sich im Haltekragen 35 abstützt oder der Stützkorb 36 einstückig an den Haltekragen 35 angeformt.

Der Innenfilterschlauch 28 ist beim hier gezeigten Schlauchfilter 22 etwas kürzer ausgebildet als der Stützkorb 36 (Fig. 3). Das zum Ansaugende 34 des Schlauchfilters 22 weisende Ende des Innenfilterschlauchs 28 ist verschlossen durch eine Kappe 48. Diese Verschlusskappe 48 ist vorzugsweise aus dünnwandigen Kunststoff gebildet und verfügt über einen zylindrischen Kragen 49 sowie einen auf der zum Ansaugende 34 weisenden Seite an den Kragen 49 angeformten Verschlusskegel 50. Ein Endbereich des Innenfilterschlauchs 28 ist mit der Verschlusskappe 48 verbunden, und zwar genauso wie die Kappe 33 mit den Filterschläuchen 27 und 28 verbunden ist, beispielsweise durch Nähen. Das zum Ansaugende 34 weisende Ende des Innenfilterschlauchs 28 mit einer daran befestigten Verschlusskappe 48 ist in Radialrichtung im Stützkorb 36 gehalten. In axialer Richtung ist der Innenfilterschlauch 28 am Stützkorb 36 festgebunden, beispielsweise durch mindestens einen Kabelbinder 51, der durch eine Öse 52 an der Spitze der Verschlusskappe 48 und Bohrungen 53 in mindestens einigen Längsstegen 39 hindurch verläuft (Fig. 3). Es ist aber auch denkbar, das zum Ansaugende 34 weisende Ende des Innenfilterschlauchs 28 mit der Verschlusskappe 48 an einer Abrütteleinrichtung zu befestigen. Durch gelegentliche pulsierende und/oder schwingende Bewegungen der Abrütteleinrichtung wird mindestens der Innenfilterschlauch 28, vorzugsweise gleichzeitig auch der Außenfilterschlauch 27, von anhaftenden Feststoffpartikeln, die aus der Luft ausgefiltert wurden, befreit.

In der Fig. 1 ist die Luftströmung durch den Schlauchfilter 22 der Schlauchfilteranlage 20 dargestellt. Indem Luft über das Ansaugende 34 aus dem Schlauchfilter 22 herausgesaugt wird, entsteht im Ringraum 29 zwischen den Filterschläuchen 27 und 28 ein Unterdruck. Es wird so das zu filternde Luft-Feststoffgemisch an der Außenseite des Außenfilterschlauchs 27 und an der Innenseite des Innenfilterschlauchs 28 angesaugt. Zur Innenseite des Innenfilterschlauchs 28 gelangt das von den Feststoffen zu befreiende Feststoff-Luftgemisch durch die mittige, zylindrische Öffnung in der Kappe 33 am unteren Ende des Schlauchfilters 22.

Durch den Unterdruck im Ringraum 29 wird durch die Filterflächen der Filterschläuche 27 und 28 Luft von der Außenseite des Außenfilterschlauchs 27 und der Innenseite des Innenfilterschlauchs 28 in den Ringraum 29 gesogen. Dabei werden an der Außenseite des Außenfilterschlauchs 27 und an der Innenseite des Innenfilterschlauchs 28 die auszufilternden Feststoffe zurückgehalten, sodass von Feststoffen befreite Luft in den Ringraum 29 gelangt und durch das Ansaugende 34 nach oben aus dem Schlauchfilter 22 herausgesaugt wird. An der Außenseite des Außenfilterschlauchs 27 und der Innenseite des Innenfilterschlauchs 28 anhaftende Feststoffe fallen von den Filterflächen der Filterschläuche 27, 28 nach unten ab, und zwar von der Innenseite des Innenfilterschlauchs 28 durch die dem Innendurchmesser des Innenfilterschlauchs 28 entsprechende kreisförmige Öffnung in der Kappe 33. Die ausgefilterten Feststoffe, die von dem Schlauchfilter 22 abfallen, werden im Bodenbereich der Schlauchfilteranlage 20 gesammelt und von Zeit zu Zeit abtransportiert.

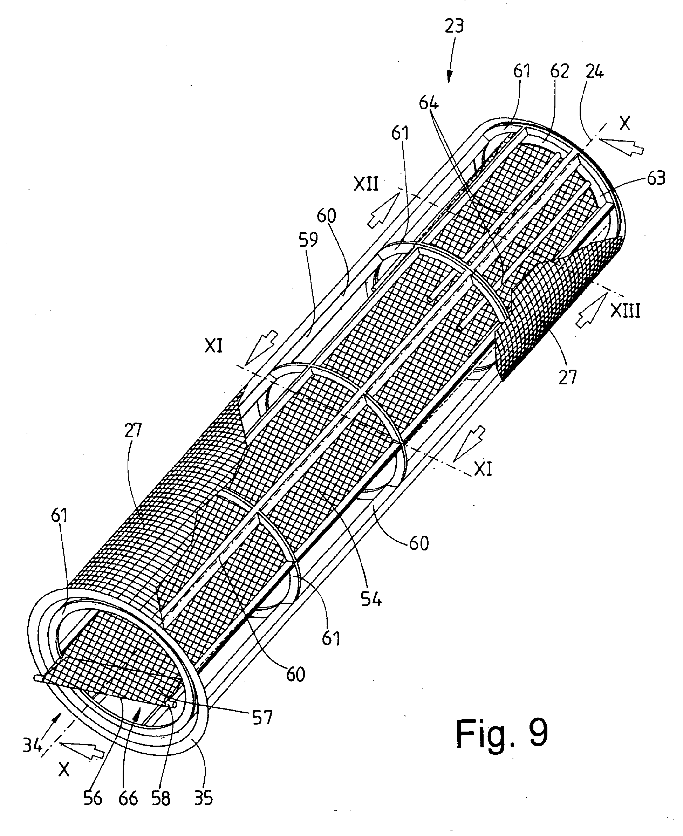

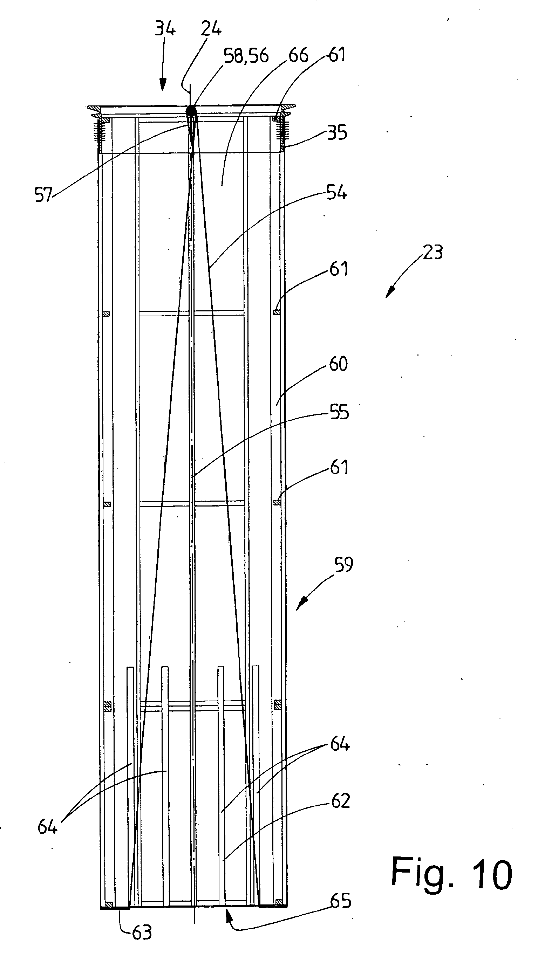

Der in den Fig. 9 und 10 gezeigte Schlauchfilter 23 unterscheidet sich vom Schlauchfilter 22 dadurch, dass der Innenfilterschlauch 54 zum Ansaugende 34 hin sich verjüngt, also in Längsrichtung konisch verläuft. Im gezeigten Ausführungsbeispiel verjüngt sich der Innenfilterschlauch 54 nur entlang einer Ebene quer zur Längsmittelebene 55, indem das zum Ansaugende 34 weisende Ende des Innenfilterschlauchs 54 eine durch die Längsmittelachse 24 verlaufende Kante 56 aufweist, die mit einer Tasche 57 versehen ist, durch die ein Haltestab 58 gesteckt ist. Der Haltestab 58 stützt sich mit einem äußeren Ende entweder auf dem zum Ansaugende 34 weisenden Ende eines zylindrischen Stützkorbs 59 für den Außenfilterschlauch 27 oder den Haltekragen 35 des Schlauchfilters 23 am Ansaugende 34 ab. Dadurch wird das zum Ansaugende 34 weisende Ende des sich verjüngenden Filterschlauchs 54 axial gespannt und radial unverschieblich am Stützkorb 59 und/oder am Haltekragen 35 fixiert.

Beim Schlauchfilter 23 ist am Stützkorb 59 nur der Außenfilterschlauch 27 abgestützt. Demzufolge weist der Stützkorb 59 eine zylindrische gitterartige Stützstruktur aus Längsstäben 60 und diese verbindende Ringe 61 auf. Auf den einstückig aus Kunststoff hergestellten Stützkorb 59 ist der Außenfilterschlauch 27 aufgezogen.

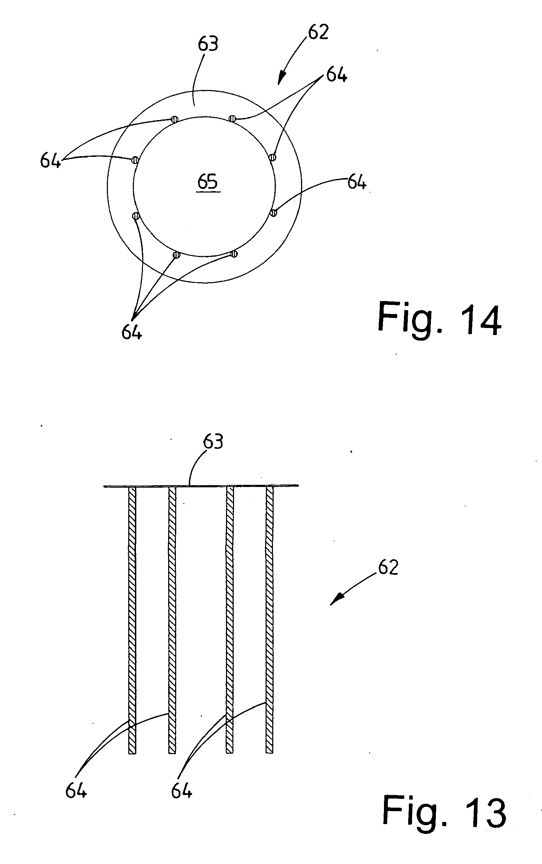

Dem Innenfilterschlauch 54 ist ein eigener Stützkorb 62 zugeordnet. Dieser Stützkorb 62 ist in den Fig. 13 und 14 gezeigt. Demzufolge setzt sich der Stützkorb 62 zusammen aus einem Ring 63 und auf den Umfang des Innenfilterschlauchs 54 verteilte Stäbe 64. Die in Längsrichtung des Innenfilterschlauchs 54 an der Außenseite desselben verlaufenden Stäbe 64 sind mit ihren Enden auf einer Seite einstückig mit dem Ring 63 verbunden. Die Stäbe 64 sind kürzer als der Innenfilterschlauch 54, erstrecken sich nämlich nur über etwa ein Drittel seiner Länge. Der Stützkorb 62 ist dem dem Ansaugende 34 gegenüberliegenden (unteren) Ende des Innenfilterschlauchs 54 zugeordnet, indem die Stäbe 64 außen am unteren Endbereich des Innenfilterschlauchs 54 anliegen und das untere Ende des Innenfilterschlauchs 54 mit dem Stützkorb 62, insbesondere dem Ring 63, verbunden ist, beispielsweise durch Nähen, Kleben, Klemmen oder dergleichen. Auch der Stützkorb 62 ist aus Kunststoff hergestellt.

Der Stützkorb 62 ist zentrisch in den Stützkorb 59 für den Außenfilterschlauch 27 eingesetzt, wobei ein gegenüber den Stäben 64 nach außen vorstehender Bereich des Rings 63 auf einer ebenfalls von einem Ring 65 gebildeten Stirnseite des Stützkorbs 59 für den Außenfilterschlauch 27 anliegt, und zwar vorzugsweise dichtend. Der Ring 63 umgibt eine innere Öffnung 65 des Stützkorbs 62, die etwa dem Innendurchmesser des Innenfilterschlauchs 54 entspricht. Um die Öffnung 65 herum sind mit gleichmäßigen Abständen verteilt die Stäbe 64 angeordnet. Durch diese Öffnung 65 kann zu filternde Luft, die noch Feststoffpartikel enthält, oder Staub in das Innere des Innenfilterschlauchs 54 gelangen. Zwischen dem Außenfilterschlauch 27 und dem Innenfilterschlauch 54 des Schlauchfilters 23 ist ein ringartig umlaufender Zwischenraum 66 vorhanden, der im Bereich des Stützkorbs 62 die Gestalt eines zylindrischen Ringraums aufweist und im zum Ansaugende 34 anschließenden Bereich des sich oberhalb des Stützkorbs 62 verjüngenden Innenfilterschlauchs 54 zum Ansaugende 34 im Bezug auf die Längsmittelebene 55 stetig größer wird.

Die Luftströmung beim Betrieb des Schlauchfilters 23 ist in der Fig. 8 durch Pfeile angedeutet. Dies entspricht im Prinzip der Luftströmung, wie sie weiter oben im Zusammenhang mit dem Schlauchfilter 22 beschrieben worden ist. Nur wird der Innenraum des Innenfilterschlauchs 54, durch den die zu filternde Feststoffe enthaltende Luft oder Staub angesaugt wird, in Richtung zum Ansaugende 34 hin infolge des sich verjüngenden Innenfilterschlauchs 54 kontinuierlich kleiner.

### Bezugszeichenliste:

- 20: Schlauchfilteranlage
- 21: Gehäuse
- 22: Schlauchfilter
- 23: Schlauchfilter
- 24: Längsmittelachse
- 25: Zwischendecke
- 26: Ansaugstutzen
- 27: Außenfilterschlauch
- 28: Innenfilterschlauch
- 29: Ringraum
- 30: Kreisringfläche
- 31: Außenkragen
- 32: Innenkragen
- 33: Kappe
- 34: Ansaugende
- 35: Haltekragen
- 36: Stützkorb
- 37: Längsstab
- 38: Ring
- 39: Längssteg
- 40: Längskante
- 41: Längsmittelebene
- 42: gedachte Zylinderfläche
- 43: Halbschale
- 44: Halbschale
- 45: Längsrand
- 46: Filmscharnier
- 47: Längsrand
- 48: Verschlusskappe
- 49: Kragen
- 50: Verschlusskegel
- 51: Kabelbinder
- 52: Öse
- 53: Bohrung
- 54: Innenfilterschlauch
- 55: Längsmittelebene
- 56: Kante
- 57: Tasche
- 58: Haltestab
- 59: Stützkorb
- 60: Längsstab
- 61: Ring
- 62: Stützkorb
- 63: Ring
- 64: Stab
- 65: Öffnung
- 66: Zwischenraum

## Patentansprüche

1. Schlauchfilter zum Trennen von Feststoffen, insbesondere Spänen und/oder Staub, aus einem Luft-Feststoffgemisch mit mindestens einem Filterschlauch (27) und einen Stützkorb (36, 59) für den Filterschlauch (27), **gekennzeichnet durch** einen Außenfilterschlauch (27) und mindestens einen Innenfilterschlauch (28, 54).

2. Schlauchfilter nach Anspruch 1, **dadurch gekennzeichnet, dass** der mindestens eine Innenfilterschlauch (28, 54) im Außenfilterschlauch (27) angeordnet ist, vorzugsweise zwischen dem Außenfilterschlauch (27) und dem insbesondere konzentrisch in demselben angeordneten Innenfilterschlauch (28, 54) ein Ringraum (29) bzw. Zwischenraum (66) gebildet ist.

3. Schlauchfilter nach Anspruch 2, **dadurch gekennzeichnet, dass** der Ringraum (29) bzw. Zwischenraum (66) an einem Ende geschlossen ist, vorzugsweise an einem Ende, das einem Ansaugende (34), durch das Luft in den Ringraum (29) bzw. Zwischenraum (66) gesaugt wird, gegenüberliegt.

4. Schlauchfilter nach einem der vorhergehenden Ansprüche, **dadurch gekennzeichnet, dass** das dem Ansaugende (34) gegenüberliegende Ende des Ringraums (29) bzw. Zwischenraums (66) verschließbar ist durch eine ringförmige Kappe (33) bzw. einen Ring (65), woran mindestens der Innenfilterschlauch (28, 54) befestigt ist und/oder eine zum Ansaugende (34) weisende Stirnseite des Innenfilterschlauchs (28, 54) verschlossen ist, vorzugsweise luftdicht.

5. Schlauchfilter nach einem der Ansprüche 1 bis 4, **dadurch gekennzeichnet, dass** der Innenfilterschlauch (28) zylindrisch oder mindestens teilweise konisch ausgebildet ist.

6. Schlauchfilter nach einem der vorhergehenden Ansprüche, **dadurch gekennzeichnet, dass** der Stützkorb (36) zur Anordnung zwischen dem Außenfilterschlauch (27) und dem Innenfilterschlauch (28) ausgebildet ist, wobei vorzugsweise der Stützkorb (36) im Ringraum (29) zwischen dem Außenfilterschlauch (27) und dem Innenfilterschlauch (28) angeordnet ist, insbesondere derart, dass der Stützkorb (36) sowohl den Außenfilterschlauch (27) als auch den Innenfilterschlauch (28) abstützt.

7. Schlauchfilter nach einem der vorhergehenden Ansprüche, **dadurch gekennzeichnet, dass** der Stützkorb (36) Längsstege (39) aufweist, deren nach innen weisende Längskanten (40) zur Anlage von außen an den Innenfilterschlauch (28) ausgebildet sind, vorzugsweise die zur Anlage des Innenfilterschlauchs (28) dienenden Längskanten (40) aller Längsstege (39) des Stützkorbs (36) auf einer gedachten Zylinderfläche (42) liegen, die mit dem Durchmesser des Innenfilterschlauchs (28) korrespondiert und/oder mindestens ein Großteil der Längsstege (39) des Stützkorbs (36) parallel zueinander verläuft, vorzugsweise parallel zu einer Längsmittelebene (41) und/oder auf der Längsmittelebene (41) des Stützkorbs (36).

8. Schlauchfilter nach einem der vorhergehenden Ansprüche, **dadurch gekennzeichnet, dass** dem Außenfilterschlauch (27) und dem Innenfilterschlauch (54) jeweils ein eigener Stützkorb (59, 62) zugeordnet ist, wobei insbesondere die Stützkörbe (59, 62) am dem Ansaugende (34) gegenüberliegenden Ende des Außenfilterschlauchs (27) und des Innenfilterschlauchs (54) relativ zueinander im Wesentlichen unverschieblich fixiert sind, vorzugsweise untereinander.

9. Schlauchfilter nach Anspruch 8, **dadurch gekennzeichnet, dass** der Stützkorb (62) für den Innenfilterschlauch (54) letzteren auf einen Teil seiner Länge von außen umgibt, vorzugsweise ausgehend vom dem Ansaugende (34) gegenüberliegenden Ende des Innenfilterschlauchs (54).

10. Schlauchfilter nach einem der Ansprüche 8 oder 9, **dadurch gekennzeichnet, dass** ein Zwischenraum (66) zwischen dem Außenfilterschlauch (27) und dem Innenfilterschlauch (54) am dem Ansaugende (34) gegenüberliegenden Ende verschlossen ist durch den Stützkorb (59) für den Außenfilterschlauch (27) und/oder den Stützkorb (62) für den Innenfilterschlauch (54).

11. Stützkorb für einen Schlauchfilter für vorzugsweise Schlauchfilteranlagen, mit einer gitterartigen Stützstruktur zur innenseitigen Abstützung eines Außenfilterschlauchs, **gekennzeichnet durch** zusätzlich Längsstege (39) mit ins Innere der Stützstruktur weisenden Längskanten (40) zur außenseitigen Abstützung eines Innenfilterschlauchs (28).

12. Stützkorb nach Anspruch 11, **dadurch gekennzeichnet, dass** mindestens ein Großteil der Längsstege (39) parallel zueinander verläuft, vorzugsweise parallel zu einer Längsmittelebene (41) und/oder auf der Längsmittelebene (41) liegt und/oder die freien Längskanten (40) als Längsstege (39) auf einer gedachten Zylinderfläche (42) liegen, deren Durchmesser vorzugsweise dem Durchmesser des Innenfilterschlauchs (28) entspricht.

13. Stützkorb nach einem der Ansprüche 11 oder 12, **gekennzeichnet durch** zwei vorzugsweise gleiche Halbschalen (43, 44), die an benachbarten Längsrändern (45) schwenkbar miteinander verbunden sind und an mindestens einem außenliegenden Längsrand (47) Verbindungsmittel aufweisen.

14. Schlauchfilteranlage mit einem Gehäuse, in dem vorzugsweise hängend mehrere Schlauchfilter angeordnet sind, **gekennzeichnet durch** eine Ausbildung der Schlauchfilter (22, 23) nach einem oder mehreren der Ansprüche 1 bis 10.

15. Schlauchfilteranlage nach Anspruch 14, **dadurch gekennzeichnet, dass** die Schlauchfilter (22) mindestens einen Stützkorb (36) aufweisen, der nach einem oder mehreren der Ansprüche 11 bis 13 ausgebildet ist.
